# FASCICULE DE BREVET EUROPEEN

(11) **EP 0 508 965 B1**
(45) Date de publication et mention de la délivrance du brevet: **05.07.1995**
(21) Numéro de dépôt: 92830171.2
(22) Date de dépôt: 07.04.1992
(51) Int. Cl.: B65G 65/48

(54) **Dispositif pour le dosage de colorants en poudre, grains ou microperles**
Dosiervorrichtung für Farbpulver, -körner oder -mikroperlen
Dosage device for colour-powder, -grains or -microparticles

(30) Priorité: 08.04.1991 IT PT910006
(43) Date de publication de la demande: 14.10.1992
(73) Titulaire: TECNORAMA S.r.l., Prato (Firenze) (IT)
(72) Inventeur: Scatizzi, Mario, I-51030 Oistoia (IT)
(74) Mandataire: Martini, Lazzaro

(56) Documents cités:
- WO-A-91/04933
- DE-A- 2 731 798
- DE-U- 9 014 270
- FR-A- 2 128 058
- GB-A- 762 433

## Description

La présente invention concerne un dispositif pour le dosage de colorants en poudre, grains ou microperles, spécialement pour l'industrie textile, de la tannerie ou du papier.

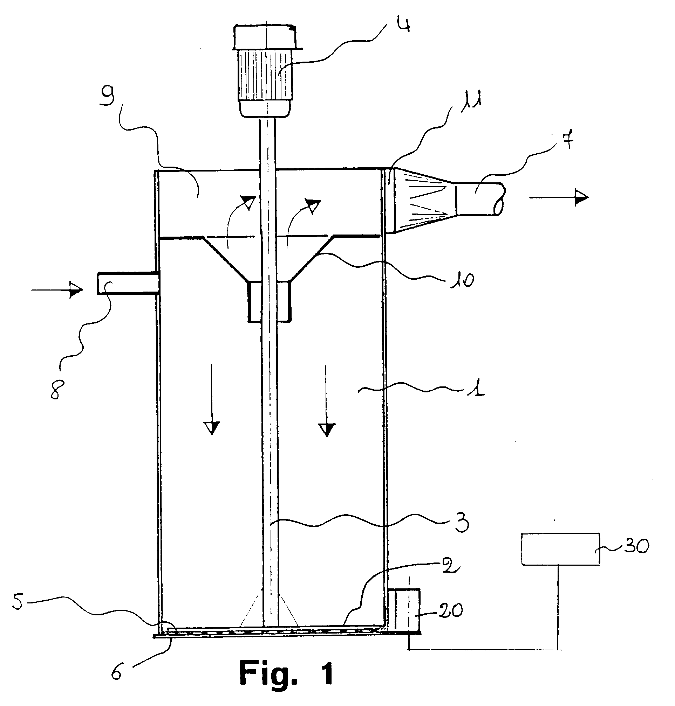

On connaît d'après le document DE-U-9 014 270, un dispositif pour recueillir et distribuer des matières en poudre, lequel, dans la version illustrée dans les figures 1-3, comprend une plaque pourvue de plusieurs orifices à travers lesquels on fait passer la substance au moyen d'un collecteur muni d'une palette tournant autour d'un arbre vertical entra né par un organe moteur correspondant. Un plan situé au-dessous de la plaque perforée précitée permet de recueillir la matière ainsi tamisée, et une pale en forme de faux actionnée par ledit arbre vertical permet d'amener la matière recueillie dans un conduit central de sortie.
Mais ce dispositif ne permet pas le réglage de la taille des grains de la matière tamisée et, par ailleurs, il ne permet pas de régler rapidement le débit de la matière traitée, ce qui réduit fortement son degré de souplesse et limite son utilisation à des applications dans lesquelles il n'est pas nécessaire de changer rapidement la quantité de matière traitée, comme par exemple le transfert de matière d'un silo à un autre ou encore son conditionnement.

Il est également connu, d'après le même document, un dispositif pour recueillir une matière en grains, lequel, dans la version illustrée dans les figures 4-6, est pourvu d'une pluralité d'éléments plats, entra nés horizontalement et alternativement dans les deux sens, lesquels dirigent la matière à traiter dans des fentes diagonales correspondantes ou dans des trous correspondants d'une plaque. Pour le réglage de la taille des grains de la matière traitée, une deuxième plaque perforée est disposée au-dessous du premier de manière que les trous ou fentes des deux plaques correspondent exactement ou seulement partiellement.
Mais ce dispositif n'est pas en mesure lui non plus de garantir le degré de souplesse nécessaire pour les applications qui nécessitent de manière continue des variations rapides du débit de la matière à la sortie du dispositif.

Il est aussi connu, d'après le document WO91/04933 (Article 54(3) de la CBE), un dispositif pour débiter des matières en pudre ou en grains, lequel comprend un récipient pour la matière à débiter à l'intérieur duquel est inférieurement prédisposée une chambre de prédosage délimitée par deux éléments à pale horizontaux tournants autour à un axe vertical, laquelle est comunicante supérieurement avec le récipient et infèrieurement avec un alimentateur à vis pour le débit véritable des matières après leur pésage. Mais aussi ce dispositif connu ne permet pas, de régler avec grande rapidité et précision la quantité de matière débitèe.

La présente invention a pour but principal d'éliminer les inconvénients précités.

Ce résultat a été atteint conformément à l'invention en adoptant l'idée de réaliser un dispositif pour le dosage de matières en poudre, grains ou microperles, spécialement des colorants et comprenant des moyens pour contenir le colorant; des moyens pour le compactage et l'expulsion du colorant hors des moyens pour contenir le colorant; des moyens pour la séparation des particules du colorant à la sortie des moyens pour contenir le colorant; des moyens pour le dosage du colorant qui a été traité; dans lequel lesdits moyens pour contenir le colorant sont constitués par un recipient cylindrique vertical con un orifice latéral pour l'entrée du colorant, avec une chambre supérieure, qui communique avec le récipient par l'intermédiaire d'une trémie, et avec des moyens d'aspiration à partir de ladite chambre supérieure; et ce dispositif étant pourvu de moyens de pesage du colorant en sortie et d'un ordinateur électronique pour le contrôle et la commande pour la gestion des fonctions remplies par tous les moyens précités.

Les avantages obtenus grâce à la présente invention consistent essentiellement dans le fait qu'il est possible de régler avec continuité, rapidité et une grande précision la quantité du colorant traité, même s'il se présente sous forme de poudre très fine et avec des variations de poids allant d'un millième à un centième de gramme; qu'il est possible de garantir un degré de fiabilité élevé même après une longue période de fonctionnement.

Ces avantages et caractéristiques de l'invention ainsi que d'autres seront plus et mieux compris de chaque homme du métier à la lumière de la description qui va suivre et à l'aide du dessin annexé donné à titre d'exemplification pratique de l'invention, mais à ne pas considérer dans le sens limitatif; dessin sur lequel l'unique figure représente la vue en coupe longitudinale d'un dispositif selon l'invention.

Réduit à sa structure essentielle et en référence à la Figure du dessin annexé, un dispositif pour le dosage de colorants en poudre, grains ou microperles comprend:
- un récipient (1) pour recueillir le colorant à traiter approvisionné à partir d'un réservoir à travers un conduit d'entrée (8);
- un tamis (5) à grille, monté fixe à la base du récipient (1) avec un racleur (2) disposé au-dessus et entra né en rotation au moyen d'un moteur électrique (4) avec arbre (3) pour le compactage et l'expulsion du colorant;
- un obturateur (6) du type à compas, monté au-dessous du tamis (5), pour le dosage du colorant à la sortie du récipient (1);
- une balance de précision (20) pour le pesage du colorant passant à travers l'orifice de l'obturateur (6);
- un ordinateur électronique (30) pour le contrôle et la commande de la vitesse de rotation du racleur (2), de l'ouverture de l'obturateur (6) et de la valeur du pesage de la balance (20).
Plus en particulier, ledit récipient est pourvu d'une chambre supérieure (9) qui communique avec celui-ci par l'intermédiaire d'une trémie centrale (10) à axe vertical et avec un aspirateur externe, non représenté, par l'intermédiaire d'un conduit (7) muni d'un filtre (11), de manière à engendrer une décompression dans le récipient (1) et à favoriser la séparation et la chute des particules qui composent le colorant.

Avantageusement, conformément à l'invention, ledit ordinateur électronique (30) est programmable, pour permettre une variation la plus grande possible de la quantité et/ou des dimensions, c'est-à-dire du dosage, des particules de colorant traité à l'aide du dispositif, en fonction des exigences contingentes des secteurs de traitement qui utilisent le colorant.

Le fonctionnement du dispositif est le suivant.
Le colorant introduit dans le récipient (1) à travers le conduit d'entrée (8), est minutieusement subdivisé en particules par le flux d'air engendré par l'aspirateur, lesquelles tombent sur le fond; à cet endroit, le racleur (2) permet de les comprimer et de les faire passer à travers les mailles du tamis (5). Le réglage de la quantité de colorant à la sortie du récipient (1) s'effectue aussi bien au moyen de l'obturateur (6), dont l'ouverture plus ou moins importante est commandée par la balance (20) en fonction du pesage qu'elle doit effectuer à chaque fois, qu'en réglant la vitesse de rotation du racleur (2) pour comprimer dans les trous du tamis (5) une quantité plus ou moins grande de colorant; ledit réglage étant commandé par l'ordinateur (30) qui est lui-même informé par un programme de gestion approprié.

## Revendications

1. Dispositif pour le dosage de colorants en poudre, grains ou microperles, comprenant:
- un récipient (1) pour recueillir le colorant à traiter approvisionné à partir d'un réservoir à travers un conduit d'entrée (8);
- un tamis (5) monté fixe à la base du récipient (1) avec un racleur (2) disposé au-dessus et entra né en rotation au moyen d'un moteur électrique (4) avec arbre (3) pour le compactage et l'expulsion du colorant;
- un obturateur (6) du type à compas, monté au-dessous du tamis (5), pour le dosage du colorant à la sortie du récipient (1),
ledit récipient étant pourvu d'une chambre supérieure (9) qui communique avec celui-ci par l'intermédiaire d'une trémie centrale (10) à axe vertical et avec un aspirateur externe, non représenté, par l'intermédiaire d'un conduit (7) muni d'un filtre (11); ledit tamis (5) étant du type à grille et ledit racleur (2) étant entraîné en rotation à vitesse réglable; et le dispositif étant équipé de:
- une balance de précision (20) pour le pesage du colorant passant à travers l'orifice de l'obturateur (6);
- un ordinateur électronique (30) pour le contrôle et la commande de la vitesse de rotation du racleur (2), de l'ouverture/fermeture de l'obturateur (6) et de la valeur du pesage de la balance (20).

2. Dispositif selon la revendication 1, caractérisé en ce que ledit ordinateur (30) est programmable, pour permettre une grande variation de la quantité et/ou des dimensions du colorant à la sortie du récipient (1).

## Claims

1. Device for dosing powder, grain or micro-pearl dyes, containing :
- a receptacle (1) to collect the dye to be treated supplied from a reservoir via an inlet duct (8) ;
- a sieve (5) mounted fixed to the base of the receptacle (1) with a scraper (2) arranged above and caused to rotate by means of an electric motor (4) with a shaft (3) for compacting and expelling the dye ;
- a shutter (6) of the compass type, mounted below the sieve (5) for dosing the dye at the outlet of the receptacle (1) ;
the said receptacle being provided with an upper chamber (9), which communicates with it via a central funnel (10) with a vertical axis and with an external breather, not shown, via a duct (7) fitted with a filter; the said sieve (5) being of the grill type and the said scraper (2) being caused to rotate at an adjustable speed; the device being equipped with
- a precision balance (20) for weighing the dye passing through the shutter (6) orifice;
- an electronic computer (30) for the control and regulation of the speed of rotation of the scraper (2), the opening /closing of the shutter (6) and the wieght measured by the balance (20).

2. Device according to claim 1, characterized in that the said computer (30) is programmable to permit great variation of the quantity and/or the dimensions of the dye at the outlet of the receptacle (1).

## Patentansprüche

1. Vorrichtung zum Dosieren von Farbstoffen in Form von Pulver, Granulat oder Mikroperlen, die folgende Bestandteile umfaßt:
- einen Behälter (1) zur Aufnahme des zu behandelnden Farbstoffes, der aus einem Vorratsgefäß über eine Zuführung (8) zugeführt wird,
- ein Sieb (5), das fest an der Basis des Behälters (1) montiert ist und über den ein Abstreifer (2) vorgesehen ist, der mit Hilfe eines Elektromotors (4) mit einer Welle (3) für eine Drehbewegung antreibbar ist, um den Farbstoff zu verdichten und auszustoßen;
- einen Drehverschluß (6), der unterhalb des Siebes (5) montiert ist, um den Farbstoff am Auslaß des Behälters (1) zu dosieren;
wobei der Behälter mit einer oberen Kammer (9) versehen ist, die mit ihm vermittels eines zentralen Trichters (10) mit senkrechter Achse und mit einem nicht dargestellten externen Absauger vermittels einer mit einem Filter (11) versehenen Leitung (7) verbunden ist, wobei das Sieb (5) grillartig ausgebildet ist und der Abstreifer (2) so angetrieben wird, daß er sich mit einer veränderbaren Geschwindigkeit dreht;
weiterhin ist die Vorrichtung ausgestattet mit
- einer Präzisionswaage (20) zum Wiegen des Farbstoffes, der durch die Öffnung des Verschlusses (6) hindurchtritt, und
- einem elektronischen Rechner (30) für die Überwachung und Steuerung der Drehgeschwindigkeit des Abstreifers (2), des Öffnens und Schließens des Verschlusses (6) und des Wiegewertes der Waage (20).

2. Vorrichtung nach Anspruch 1, dadurch **gekennzeichnet,** daß der Rechner (30) programmierbar ist, um eine weitgehende Veränderung der Menge und/oder der Dimensionen des Farbstoffes am Ausgang des Behälters (1) zu ermöglichen.
